# EUROPEAN PATENT APPLICATION

(11) **EP 0 640 278 A1**
(43) Date of publication of application: **01.03.1995**
(21) Application number: 94202228.6
(22) Date of filing: 02.08.1994
(51) Int. Cl.: A01G 1/04

(54) **A metering device for applying casing soil on compost for raising mushrooms or the like**

(30) Priority: 31.08.1993 NL 9301490
(71) Applicant: COÖPERATIEVE NEDERLANDSE CHAMPIGNONKWEKERSVERENIGING B.A., NL-6596 MA Milsbeek (NL)
(72) Inventor: Kruis, Herman Johan, NL-6602 BX Wijchen (NL)
(74) Representative: Vollebregt, Cornelis Jacobus, Ir.

(57) **Abstract**

A metering device for applying casing soil on compost for raising mushrooms or the like, said device being provided with a hopper (1) for accommodating casing soil supplied by transport means (32), for example, and with spreading means, whereby a shaft (7) provided with blades (13), which is rotatable about a substantially horizontal axis of rotation, is disposed inside the hopper (1), under an inlet opening (6) located at the upper side of the hopper, the pitch of the blades on the one part of the shaft being opposed to the pitch of the blades on the other part of the shaft, whilst a further shaft (8), which is rotatable about a substantially horizontal axis of rotation, is disposed under said shaft (7), above a trough-shaped bottom (3) of the hopper, near a substantially horizontally extending ejection slot (22), said further shaft (8) being provided with ejection means (17), by which the casing soil can be discharged from the hopper (1) via the ejection slot (22), whilst means (10,11,12) are provided for rotating both shafts (7,8).

## Description

The invention relates to a metering device for applying casing soil on compost for raising mushrooms or the like, said device being provided with a hopper for accommodating casing soil supplied by transport means; for example, and with spreading means.

For raising mushrooms or the like it is customary to arrange the compost suitable for raising crops of this type in beds and to cover the layer of compost with a layer of casing soil.

Conventional devices of this kind use spreading discs and pushing means, the construction of these devices is rather complicated and voluminous.

The object of the invention is to obtain a device of the above kind, which is of compact and light design and by means of which an effective and even spreading of casing soil can be achieved, independently of the degree of humidity of the casing soil.

According to the invention this can be achieved in that a shaft provided with blades, which is rotatable about a substantially horizontal axis of rotation, is disposed inside the hopper, under an inlet opening located at the upper side of the hopper, the pitch of the blades on the one part of the shaft being opposed to the pitch of the blades on the other part of the shaft, whilst a further shaft, which is rotatable about a substantially horizontal axis of rotation, is disposed under said shaft, above a trough-shaped bottom of the hopper, near a substantially horizontally extending ejection slot, said further shaft being provided with ejection means, by which the casing soil can be discharged from the hopper via the ejection slot, whilst means are provided for rotating both shafts.

In this manner a simple, efficient device has been obtained, to which the casing soil can be supplied through the inlet opening, for example by means of a conveyor belt, and whereby the material can be discharged in an even layer through the ejection slot.

The invention will be explained in more detail hereafter with reference to an embodiment of the construction according to the invention diagrammatically illustrated in the accompanying Figures.

Figure 1 is a cross-sectional view of a device according to the invention.

Figure 2 is a longitudinal sectional view of the device shown in Figure 1, seen in the direction according to the arrow II.

Figure 3 shows a part of a front view of the device shown in Figures 1 and 2.

Figure 4 is a side view of a blade secured to the upper shaft of the device.

Figure 5 is a side view of a blade secured to the lower shaft of the device.

Figure 6 is a side view of Figure 5.

The metering device illustrated in the Figures comprises a hopper 1, which is provided with a sloping rear wall 2, which joins a vertically extending front wall 4 via a trough-shaped bottom 3.

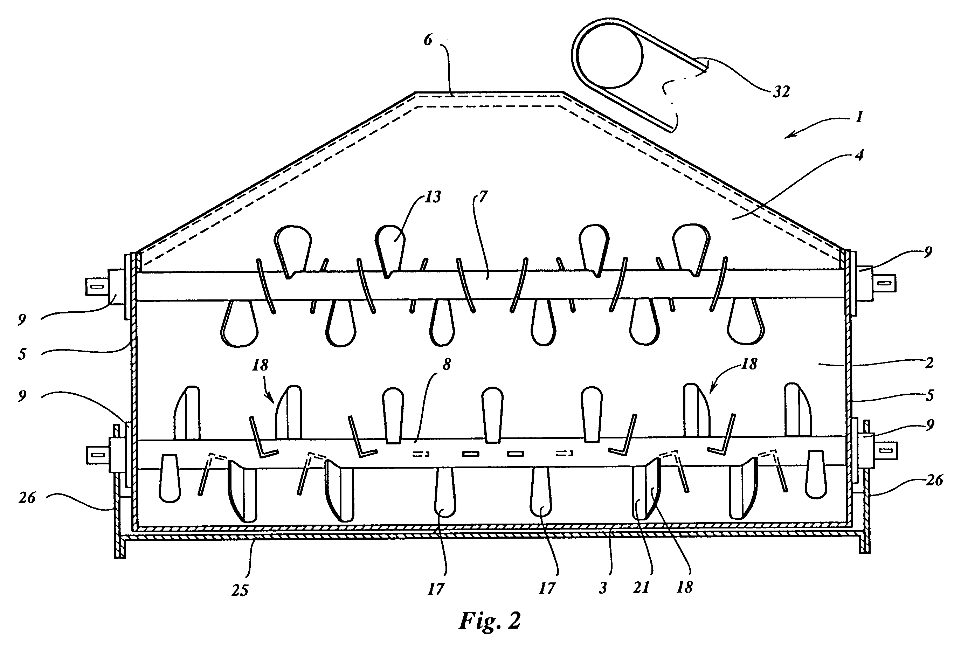

As will furthermore be apparent from Figure 2, the rear wall 2 and the front wall 4 are interconnected along part of their height by side walls 5 extending upwards from the trough-shaped bottom 3, whilst the diameter of the upper part of the hopper 1 gradually becomes smaller towards an inlet opening 6 provided at the upper side of the hopper.

Two horizontally disposed shafts 7 and 8, one being located above the other, are provided inside the hopper, said shafts being supported so as to be rotatable about their axes in journals 9 mounted on the side walls 5. The upper shaft 7 is thereby slightly shifted with respect to the vertical plane through the axis of rotation of the lower shaft 8, in the direction of the sloping rear wall 2 of the hopper.

The shafts in the illustrated embodiment may be driven via belt or chain transmissions 10 and 11, from a motor 12 mounted at the front side of the hopper, which motor 12 may for example be an electromotor or a hydromotor.

During operation the shafts 7 and 8 may be rotated in the direction of the arrows A and B respectively; thus the two shafts rotate in the same direction during operation.

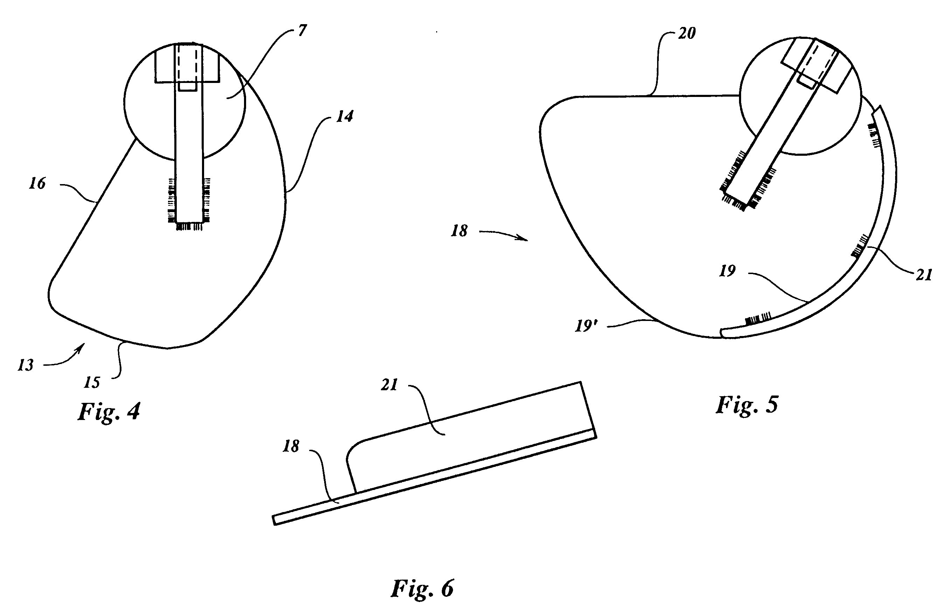

A plurality of blades 13 are secured to the shaft 7, said blades preferably being shaped as illustrated in Figure 4. As will thus be apparent from Figure 4 the leading edge 14 of the blade 13 is curved, and the outer edge 15 of the blade extends more or less concentrically about the central axis of the shaft 7, whilst the trailing edge 16 is substantially rectilinear. Furthermore it will be apparent from Figure 7 that the plate-shaped blades 13 are secured to the shaft 7 in such a manner, that they include an angle with a plane extending perpendicularly to the shaft 7. The blades 13 mounted on the right-hand part of the shaft 7 are thereby disposed in an oblique direction opposed to the direction of the blades mounted on the left-hand part of the shaft 7.

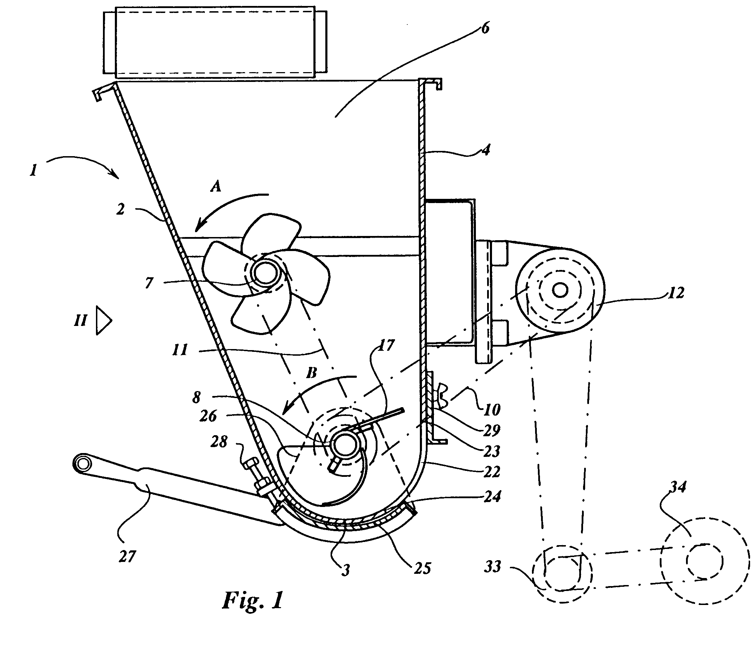

A few elongated plate-shaped ejection blades 17 are mounted on the central part of the further shaft 8 and near the ends of said shaft 8, said ejection blades 17 extending at least substantially tangentially with respect to the outer circumference of the shaft 8 in question, as will be apparent in particular from Figure 1. Furthermore blades 18, which are shown in more detail in Figures 5 and 6, are provided on the outer parts of the shaft 8. Said blades 18 have an outer edge 19 which extends concentrically about the central axis of the shaft, said outer edge blending into a curved edge 19' at the front side of the blade, seen in the intended direction of rotation according to the arrow B. At its rear side, seen in the direction of rotation, the blade is bounded by a boundary edge 20, which extends radially with respect to the central axis of the shaft.

A strip-shaped part 21 extending perpendicularly to the blade 18 is secured to the leading edge 19 of the blade 18.

The lower shaft 8 is located near a horizontally extending ejection slot 22, which is provided near the transition between the trough-shaped bottom 3 and the vertically extending front wall 4. As will be apparent from Figure 1 the upper boundary edge 23 of the ejection slot 22 is thereby located some distance above the horizontal plane including the central axis of the shaft 8. The lower boundary edge 24 of the ejection slot lies in the part of the trough-shaped bottom 3 that extends upwards from the lowermost point of the trough-shaped bottom, in the direction of the front wall 4.

A closing plate 25, which extends concentrically with respect to the trough-shaped bottom 3, is disposed under the trough-shaped bottom, said closing plate being pivotable about the journals 9 of the lower shaft 8 by means of side plates 26. The closing plate 25 is pivotable by means of a lever 27 secured to the closing plate. The closing plate 25 may be locked in a desired position by means of a set bolt 28.

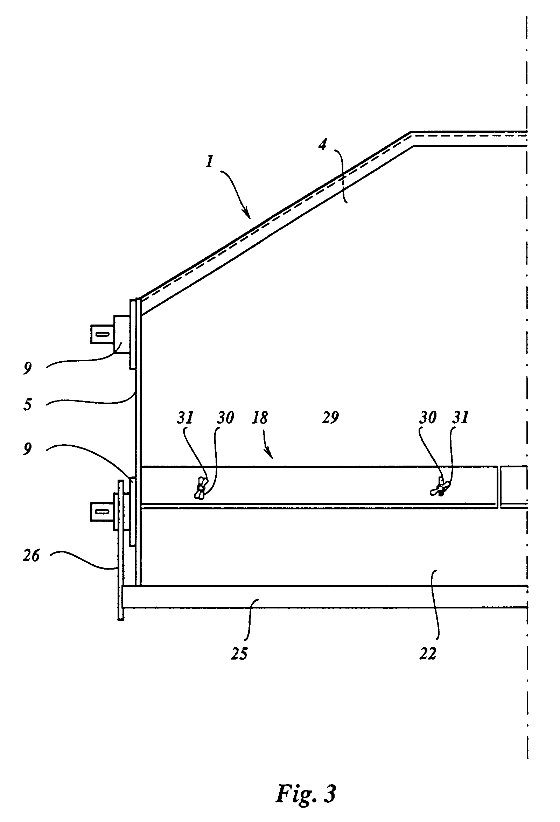

As is indicated in Figure 3 vertically adjustable, plate-shaped regulating valves 29 are provided near the upper side of the ejection slot 22, on either side of the plane of symmetry of the device extending perpendicularly to the shafts 7 and 8. Two slotted holes 30 are provided in each of said regulating valves 29, through which slotted holes bolts extend, on which clamping nuts 31 are screwed. It will be apparent that said regulating valves are vertically adjustable, the construction of the slotted holes 30 being such that the lower edge of each regulating valve is also slightly adjustable at an angle with respect to the horizontal.

During operation of the device casing soil to be handled with the device may for example be supplied to the hopper 1 by means of a conveyor belt 32, through the inlet opening provided near the upper side of the metering device, and that near the upper end of the sloping wall 2.

The upper shaft 7 rotating in the direction according to the arrow A during operation will thereby take care of it that the material is distributed in the best possible manner over the entire width of the upper part of the hopper 9 between the vertically extending walls 5. Furthermore this upper shaft 7, which is provided with blades, prevents the formation of bridges in the upper part of the hopper.

The casing soil will be ejected through the ejection slot 22 by means of the ejection blades 17 secured to the lower shaft and the strip-shaped parts 21 secured to the blades 18, which function as ejection blades. The blades 18, which are disposed with opposite pitch on both sides of the plane of symmetry of the device extending perpendicularly to the shafts 7 and 8, will thereby effect a certain displacement of the casing soil towards the outside of the hopper, in order to ensure that the casing soil is distributed as evenly as possible over the entire width of the hopper.

The casing soil may be thrown directly onto for example a compost-containing bed for raising mushrooms or the like, which is passed under the device during operation, or onto a conveyor belt, by means of which the casing soil is supplied, in a manner known per se, to a compost-containing bed for raising mushrooms or the like located inside a growing room.

The correct layer thickness may thereby be obtained by adjusting the adjustable bottom part and the plate-shaped regulating valves 29.

The above-described possibility to dispose said regulating valves 29 at an angle with respect to the horizontal furthermore makes it possible to influence the thickness of the layer of casing soil being formed over the width of the bed, which also contributes towards achieving a covering layer having a thickness which is as even as possible.

As is schematically indicated in Figure 1 the device may furthermore be provided with a drivable roller 33 or roughening shaft for influencing the structure of the covering layer and/or with drivable discs 34 for trimming the sides of the layer applied.

As a result of its compact design the device according to the invention is particularly suitable for being placed on a covering unit of a lorry or on existing filling machines for impregnated compost, whereby compost is directly provided in the beds with a layer of casing soil during filling.

## Claims

1. A metering device for applying casing soil on compost for raising mushrooms or the like, said device being provided with a hopper for accommodating casing soil supplied by transport means, for example, and with spreading means, characterized in that a shaft provided with blades, which is rotatable about a substantially horizontal axis of rotation, is disposed inside the hopper, under an inlet opening located at the upper side of the hopper, whereby the pitch of the blades on the one part of the shaft is opposed to the pitch of the blades on the other part of the shaft, whilst a further shaft, which is rotatable about a substantially horizontal axis of rotation, is disposed under said shaft, above a trough-shaped bottom of the hopper, near a substantially horizontally extending ejection slot, said further shaft being provided with ejection means, by which the casing soil can be discharged from the hopper via the ejection slot, whilst means are provided for rotating both shafts.

2. A metering device according to claim 1, characterized in that said hopper, at its side remote from said ejection slot, has a wall which slopes upwards from the trough-shaped bottom, and that said upper shaft is disposed near said wall, the axis of rotation of said upper shaft being located at the side remote from the ejection slot of a vertical plane through the axis of rotation of the lower shaft.

3. A metering device according to claim 1 or 2, characterized in that a closing plate, which is pivotable about the central axis of the lower shaft, is provided near the trough-shaped bottom, by means of which closing plate the height of the ejection slot can be regulated from below.

4. A metering device according to any one of the preceding claims, characterized in that at least one vertically adjustable regulating valve is provided near the upper side of the ejection slot, by means of which the height of the ejection slot can be regulated from above.

5. A metering device according to claim 4, characterized in that two regulating valves are provided in side-by-side relationship, in such a manner that the lower boundary edge of each regulating valve is horizontally adjustable at a desired angle with respect to the horizontal.

6. A metering device according to any one of the preceding claims, characterized in that ejection blades are secured to the lower shaft in regularly spaced-apart relationship, said ejection blades being oriented substantially parallel to the central axis of the lower shaft.

7. A metering device according to claim 6, characterized in that ejection blades mounted near the centre of the lower shaft extend substantially tangentially with respect to the outer circumference of the shaft.

8. A metering device according to claim 6 or 7, characterized in that the ejection blades mounted at some distance from the middle of the lower shaft are provided with blades extending from said blades in a direction opposed to the direction of rotation of the shaft, said blades being directed in such a manner that they displace the casing soil inside the hopper in the direction of the nearest side wall of the hopper during operation.

9. A metering device according to any one of the claims 6 - 8, characterized in that the ejection blades mounted at some distance from the middle of the lower shaft are curved from their point of attachment to the shaft in a direction opposed to the intended direction of rotation of the lower shaft.
